# FASCICULE DE BREVET EUROPEEN

(11) **EP 4 457 010 B1**
(45) Date de publication et mention de la délivrance du brevet: **11.02.2026**
(21) Numéro de dépôt: 22847613.1
(22) Date de dépôt: 26.12.2022
(51) Int. Cl.: B01D 63/06, B01D 63/16, B01D 69/04, B28B 3/26, B29C 48/06, B29C 48/11, B29C 48/30, B29C 48/32, B29C 48/92, C04B 38/00, C04B 35/04, C04B 35/111, C04B 35/46, C04B 35/48, C04B 35/565, C04B 35/58, C04B 35/626, C04B 35/634, C04B 35/636, C04B 35/581, C04B 35/583

(54) **DISPOSITIF ET PROCÉDÉ POUR LA FABRICATION PAR EXTRUSION D'UN SUPPORT POREUX AVEC UN CANAL CENTRAL RECTILIGNE ET DES CANAUX NON RECTILIGNES**
VORRICHTUNG UND VERFAHREN ZUR EXTRUSIONSHERSTELLUNG EINES PORÖSEN TRÄGERS MIT EINEM GERADLINIGEN ZENTRALEN KANAL UND NICHTLINEAREN KANÄLEN
DEVICE AND METHOD FOR THE EXTRUSION MANUFACTURE OF A POROUS SUPPORT WITH A RECTILINEAR CENTRAL CHANNEL AND NON-RECTILINEAR CHANNELS

(30) Priorité: 30.12.2021 FR 2114677
(43) Date de publication de la demande: 06.11.2024
(73) Titulaire: Technologies Avancees et Membranes Industrielles, 26110 Nyons (FR)
(72) Inventeur: LESCOCHE, Philippe, 26111 NYONS CEDEX (FR); ANQUETIL, Jérôme, 26111 NYONS CEDEX (FR)
(74) Mandataire: Cabinet Beau de Loménie
(86) Numéro de dépôt international: PCT/FR2022/052505
(87) Numéro de publication internationale: WO 2023/126608

(56) Documents cités:
- WO-A1-2020/109715
- WO-A1-93/20961
- US-A1- 2019 321 890

## Description

### Domaine Technique

La présente invention concerne le domaine technique de la séparation tangentielle mettant en œuvre des membranes de filtrations tubulaires adaptées pour assurer la séparation des molécules ou des particules contenues dans un milieu fluide à traiter, chaque membrane de filtration tubulaire comportant un support poreux rigide tubulaire dans lequel un canal non rectiligne ou plusieurs canaux non rectilignes de circulation pour le fluide à filtrer sont aménagés.

L'objet de l'invention vise plus précisément le domaine technique de l'extrusion des supports poreux rigides tubulaires des membranes de filtration tubulaires.

L'objet de l'invention trouve une application particulièrement avantageuse dans le domaine de la filtration au sens large, et notamment la nanofiltration, l'ultrafiltration, la microfiltration, ou l'osmose inverse.

### Technique antérieure

Dans l'état de la technique, il est connu de recourir à l'extrusion pour mettre en forme un support poreux à caractère tubulaire et dans lequel est aménagé une série de canaux. La technique d'extrusion possède une cadence de production très supérieure aux autres techniques de fabrication telles que les méthodes de fabrication additives telle que celle décrite par exemple dans les documents US 2019/321890 et WO 2020/109715. La vitesse linéaire d'extrusion, qui se compte à l'échelle de la minute, est en effet généralement égale ou supérieure à un mètre par minute tandis que la vitesse d'impression verticale des méthodes additives est généralement au mieux d'une dizaine d'heures par mètre. Il est à noter que la vitesse d'impression verticale des méthodes additives est fortement dépendante du nombre de canaux. Elle diminue quand le nombre de canaux augmente et un support multicanaux sera ainsi imprimé selon ledit nombre de canaux, deux à dix fois plus lentement qu'un support monocanal alors que la vitesse linéaire d'extrusion reste indépendante du nombre de canaux.

Classiquement, le support poreux fabriqué par extrusion, par exemple en matière inorganique, telle qu'en céramique peut être associé à une ou plusieurs couches séparatrices, par exemple en matière inorganique, déposées sur la surface de chaque canal de circulation et liées entre elles et au support, par frittage. Ces couches permettent d'ajuster le pouvoir de filtration de l'élément de filtration.

Le support poreux de ces éléments de filtration tubulaires est de forme allongée et présente une section transversale droite, le plus souvent polygonale ou circulaire. De nombreux supports extrudés comportant une pluralité de canaux parallèles entre eux et à l'axe longitudinal du support poreux, ont déjà été proposés. Par exemple, des éléments de filtration comportant une série de canaux non circulaires sont décrits dans la demande de brevet WO 93/07959 au nom de CERASIV, la demande de brevet EP 0 780 148 au nom de CORNING, la demande de brevet WO 00/29098 au nom d'ORELIS, les brevets EP 0 778 073 et EP 0 778 074 au nom de la demanderesse et les demandes de brevet WO 01/62370 au nom de la société des céramiques techniques et FR 2 898 513 au nom de ORELIS.

En fonctionnement, les canaux communiquent, d'un côté, avec une chambre d'entrée pour le milieu fluide à traiter et, de l'autre côté, avec une chambre de sortie. La surface des canaux est, le plus souvent, recouverte d'au moins une couche séparatrice assurant la séparation des molécules ou des particules contenues dans le milieu fluide circulant à l'intérieur des canaux, selon un sens donné, d'une extrémité des canaux dite d'entrée à l'autre extrémité dite de sortie. Un tel élément de filtration réalise, par effet tamis, une séparation des espèces moléculaires ou particulaires du produit à traiter, dans la mesure où toutes les particules ou molécules supérieures au diamètre des pores de la zone de l'élément de filtration avec lequel elles sont en contact sont arrêtées. Durant la séparation, le transfert du fluide s'effectue à travers le support et éventuellement la ou les couches séparatrices lorsqu'elles sont présentes, et le fluide se répand dans la porosité du support pour se diriger vers la surface extérieure du support poreux. La partie du fluide à traiter ayant traversé la couche de séparation et le support poreux est appelée perméat ou filtrat et se trouve récupérée par une chambre de collecte entourant l'élément de filtration.

En vue d'augmenter la surface des canaux permettant la filtration du fluide, il est souvent recherché de disposer à l'intérieur d'un même support un nombre important de canaux. Du fait du nombre important de canaux, le nombre de dispositions possible des canaux les uns par rapport aux autres est important. Parmi les avantages revendiqués de ces différentes formes, sont notamment mentionnés l'augmentation de la surface filtrante sans détérioration des caractéristiques mécaniques ou de perméabilité intrinsèque du support poreux.

II est à noter qu'en l'absence d'un canal dans la zone centrale du support contenant l'axe de symétrie, le volume qui aurait été occupé par ce canal est remplacé par de la porosité. Au début du fonctionnement d'une telle membrane dépourvue de canal central, la surface des canaux les plus proches de cet axe de symétrie et en regard de ce dernier, débite un perméat qui remplit ladite porosité. L'évacuation de ce perméat de cette zone centrale vers la surface extérieure de la membrane doit alors s'effectuer selon un trajet qui est maximal pour cette membrane. Cette distance importante engendre alors une différence de pression élevée entre la surface extérieure et ladite zone centrale autour de l'axe de symétrie, la valeur de la pression étant maximale autour de cette zone. Au cours du fonctionnement de la membrane, cette valeur maximale qui s'oppose à la pression dans le rétentat va croître jusqu'à l'égaler. Le débit dans cette zone est alors nul et il y apparait dans ces conditions, une accumulation de liquide qu'il est difficile voire même impossible de remplacer, même par des lavages. Cette absence de circulation dans la porosité de cette zone centrale du support et son inaccessibilité aux réactifs de lavage qui en découle font que, si ce liquide accumulé contient des bactéries, ces dernières peuvent proliférer sans qu'il soit possible de les éliminer, rendant ainsi improbable l'utilisation d'une membrane sans canal central dans l'industrie agro-alimentaire.

La forme et la disposition des canaux dépendent directement de l'opération d'extrusion. Pour rappel, l'extrusion est un procédé de mise en forme (thermo)mécanique par lequel une composition céramique est contrainte par compression de traverser un orifice ayant la section de la pièce à obtenir. Cet orifice correspond à l'espace laissé libre entre un ou plusieurs poinçons et la filière délimitant l'enveloppe extérieure de ladite section.

Dans l'art antérieur, il a été proposé afin d'augmenter le flux de filtrat visant à réduire le phénomène de colmatage, de créer un régime d'écoulement turbulent à l'intérieur du canal d'un élément filtrant tubulaire. Il a ainsi été proposé de réaliser des empreintes ou des reliefs sur la paroi interne des canaux pour créer à proximité de la surface filtrante, une perturbation pour le milieu fluide, limitant ainsi l'accumulation de matière et le colmatage.

Le brevet EP 0 813 445 décrit un procédé de réalisation d'empreintes à l'extérieur d'un tube poreux comportant un unique canal, lesdites empreintes, qui sont réalisées alors que le tube est encore déformable, générant une déformation homologue de la paroi intérieure dudit canal.

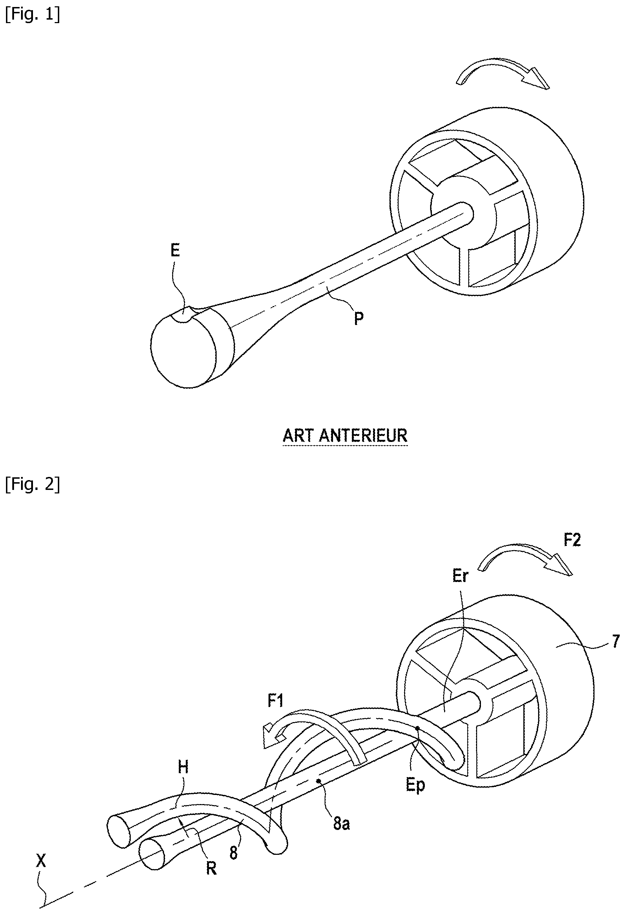

Le brevet FR 2 736 843 enseigne de réaliser des tubes poreux comportant un unique canal dont la paroi comporte des empreintes, alors que la paroi périphérique du support est lisse. Pour cela, le tube poreux est mis en forme, au moyen d'une filière d'extrusion fixe dans laquelle est monté, comme illustré à la Fig. 1, un porte-poinçons pourvu d'un poinçon P entrainé en rotation par un moteur autour de son axe, selon un sens de rotation indifférent. La composition céramique est contrainte, par un dispositif d'alimentation situé en amont, à franchir sous pression le porte-poinçons pour traverser la filière d'extrusion selon une vitesse linéaire d'extrusion. Le poinçon P est pourvu d'une ou plusieurs encoches rectilignes E permettant d'obtenir par extrusion un support poreux avec un seul canal en paroi intérieure duquel sont formées en relief une ou plusieurs nervures hélicoïdales.

Les procédés décrits dans ces deux documents (EP 0 813 445 et FR 2 736 843) ne permettent l'obtention que de reliefs pariétaux dans un tube comportant par ailleurs un seul et unique canal et ils ne peuvent pas être transposés à la fabrication de supports poreux comportant plusieurs canaux internes. Or, les éléments de filtration multicanaux sont de plus en plus recherchés car ils permettent d'augmenter la surface filtrante et d'ainsi d'augmenter leurs performances.

Il est à noter qu'il est connu, par le document WO 93/20961, dans le domaine des outils de forage pourvu de canaux de refroidissement, un procédé d'extrusion pour la fabrication des canaux de refroidissement à l'aide de poinçons hélicoïdaux. Ce document divulgue un procédé et dispositif pour la production en continu de barres cylindriques comportant au moins un canal hélicoïdal interne, et l'ébauche en métal fritté ou en céramique obtenue par ce procédé.

### Exposé de l'invention

La présente invention vise donc à remédier aux inconvénients de l'art antérieur en proposant de fournir de nouveaux supports de filtration extrudés qui présentent une structure multicanale avec une géométrie adaptée pour augmenter le flux du filtrat, avec une cadence de production très supérieure à celle des méthodes additives.

Un objet de l'invention est de proposer un support tubulaire poreux pouvant être utilisé dans tous les domaines d'applications.

Un objet de l'invention est de proposer un support tubulaire poreux pour membrane de filtration tangentielle, se présentant sous la forme d'un corps poreux céramique monolithique fritté, fabriqué par extrusion d'une composition céramique comportant une phase inorganique solide pulvérulente et dans lequel sont aménagés par extrusion à l'aide de poinçons, un canal rectiligne centré sur un axe de symétrie du support et au moins un canal de circulation d'un milieu fluide à traiter avec une forme hélicoïdale enroulée autour de l'axe de symétrie, les canaux présentant une rugosité pariétale limitée et inférieure à la granularité de la phase inorganique solide pulvérulente de la composition céramique.

Avantageusement, le corps poreux céramique monolithique fritté supporte une pression interne d'au moins 10 bars sans éclatement.

Un autre objet de l'invention est de fournir une membrane de filtration tangentielle selon laquelle au moins une couche séparatrice revêt la paroi des canaux de circulation du milieu fluide à traiter du support poreux tubulaire conforme à l'invention.

Un autre objet de l'invention est donc de proposer un nouveau dispositif adapté pour assurer la fabrication par extrusion, d'un support tubulaire poreux présentant une structure multicanale avec une géométrie adaptée pour augmenter le flux du filtrat.

L'objet de l'invention est de proposer un dispositif conforme à l'invention pour la fabrication par extrusion, d'un support tubulaire poreux à partir d'une composition céramique, comportant :
- une filière d'extrusion fixe dans laquelle est monté un porte-poinçons pourvu d'au moins un poinçon ;
- un système d'entraînement en rotation du porte-poinçons ;
- et un dispositif d'alimentation pour contraindre la composition céramique à franchir sous pression le porte-poinçons pour traverser la filière d'extrusion selon une vitesse linéaire d'extrusion. Selon l'invention, le dispositif comporte :
- un porte-poinçons muni d'un poinçon rectiligne centré sur l'axe de symétrie et d'au moins un poinçon avec une forme hélicoïdale enroulée autour d'un axe de symétrie selon un sens d'enroulement et un pas d'enroulement ;
- un système d'entraînement entraînant en rotation le porte-poinçons autour dudit axe de symétrie selon un sens de rotation inverse du sens d'enroulement du ou des poinçons et selon une vitesse de rotation égale à la vitesse linéaire d'extrusion de la composition céramique, divisée par le pas d'enroulement des poinçons de forme hélicoïdale.

Selon une variante avantageuse de réalisation, le porte-poinçons est pourvu de plusieurs poinçons enroulés de manière concentrique autour d'un axe de symétrie commun selon un même sens d'enroulement et un même pas d'enroulement.

Selon une autre variante avantageuse de réalisation, le porte-poinçons est pourvu de plusieurs poinçons disposés selon au moins deux couronnes concentriques.

Avantageusement, chaque poinçon ayant une forme hélicoïdale possède une longueur prise suivant l'axe de symétrie, égale ou supérieure au quart du pas d'enroulement.

Selon une autre caractéristique de l'invention, le système d'entraînement entraîne en rotation le porte-poinçons avec une vitesse de rotation égale à la vitesse linéaire d'extrusion de la composition céramique, divisée par le pas d'enroulement des poinçons, en tenant compte d'une marge de tolérance de plus ou moins 15%.

Par exemple, le système d'alimentation est un système du type piston ou à vis sans fin.

Avantageusement, le dispositif comporte un système de chauffage de la filière d'extrusion pour maintenir le porte-poinçons, le ou les poinçons et la composition céramique à une température comprise entre 50°C et 300°C.

Selon un exemple de réalisation, le système d'entraînement en rotation du porte-poinçons est monté en aval du système d'alimentation.

Selon un autre exemple de réalisation, le système d'entraînement en rotation du porte-poinçons est situé sur le côté du porte-poinçons de sorte que l'axe de symétrie du porte-poinçons est parallèle à la direction d'alimentation du système d'alimentation.

Selon un autre exemple de réalisation, le système d'entraînement en rotation du porte-poinçons est situé à l'arrière du porte-poinçons de sorte que l'axe de symétrie du porte-poinçons fait un angle inférieur ou égal à 90° par rapport à la direction d'alimentation du système d'alimentation débouchant en amont ou en aval du porte-poinçons.

Un autre objet de l'invention est de proposer un procédé pour la fabrication d'un support tubulaire poreux à partir d'une composition céramique, consistant :
- à mettre à disposition une filière d'extrusion fixe dans laquelle est monté un porte-poinçons pourvu d'un poinçon rectiligne centré sur un axe de symétrie et d'au moins un poinçon ayant une forme hélicoïdale enroulée autour d'un axe de symétrie selon un sens d'enroulement et un pas d'enroulement ;
- à assurer que la composition céramique franchisse le porte-poinçons pour traverser la filière d'extrusion selon une vitesse linéaire d'extrusion ;
- et à assurer l'entraînement en rotation du porte-poinçons selon un sens de rotation inverse du sens d'enroulement du ou des poinçon(s) de forme hélicoïdale et avec une vitesse de rotation égale à la vitesse linéaire d'extrusion de la composition céramique, divisée par le pas d'enroulement des poinçons de forme hélicoïdale.

Selon une caractéristique avantageuse de ce procédé, afin que la vitesse de rotation du porte-poinçons soit égale à la vitesse linéaire d'extrusion de la composition céramique, divisée par le pas d'enroulement , on agit sur le réglage soit uniquement de la vitesse de rotation du porte-poinçons soit uniquement sur la vitesse linéaire d'extrusion soit sur la vitesse de rotation du porte-poinçons et sur la vitesse linéaire d'extrusion.

Avantageusement, on alimente la filière d'extrusion fixe avec une composition céramique comportant une phase inorganique solide pulvérulente sous la forme de particules de diamètre moyen compris entre 0,1 et 150 micromètres et une matrice.

Selon une autre caractéristique avantageuse, on alimente la filière d'extrusion fixe avec une composition céramique comportant une première phase inorganique solide pulvérulente sous la forme de particules de diamètre moyen compris entre 0,1 et 150 micromètres et une seconde phase sous la forme d'une matrice comprenant au moins un polymère thermofusible.

Selon une autre caractéristique de ce procédé, au moins un extrudat est récupéré en sortie de la filière d'extrusion fixe avec une longueur déterminée pour former un support tubulaire poreux et cet extrudat est soumis à un post traitement de frittage.

### Brève description des dessins

[Fig. 1] La Figure 1 est une vue en perspective illustrant un porte-poinçons et un poinçon de l'art antérieur et se présentant sous la forme d'une broche pourvue à sa périphérie d'une encoche rectiligne.
[Fig. 2] La Figure 2 est une vue en perspective d'un exemple de réalisation d'un porte-poinçons conforme à l'invention pourvu d'un poinçon rectiligne centré et d'un poinçon avec une forme hélicoïdale.
[Fig. 3] La Figure 3 est une vue en perspective d'un autre exemple de réalisation d'un porte-poinçons conforme à l'invention pourvu d'un poinçon rectiligne centré et de deux poinçons avec une même forme hélicoïdale.
[Fig. 4] La Figure 4 est une vue en coupe transversale des trois poinçons conformes à l'invention, illustrés à la Fig. 3.
[Fig. 5] La Figure 5 est une vue en perspective d'un autre exemple de réalisation d'un porte-poinçons conforme à l'invention pourvu de trois poinçons avec une même forme hélicoïdale et d'un poinçon rectiligne centré.
[Fig. 6] La Figure 6 est une vue en coupe transversale des quatre poinçons conformes à l'invention illustrés à la Fig. 5.
[Fig. 7] La Figure 7 est une vue en perspective d'un autre exemple de réalisation d'un porte-poinçons conforme à l'invention pourvu d'un poinçon rectiligne centré, de trois poinçons avec une forme hélicoïdale distribués selon une première couronne concentrique à une deuxième couronne comportant huit poinçons avec une forme hélicoïdale, les trois poinçons de la première couronne ayant une forme différente de celle des huit poinçons de la deuxième couronne, les onze poinçons hélicoïdaux étant enroulés autour d'un axe de symétrie selon un même sens d'enroulement et un même pas d'enroulement.
[Fig. 8] La Figure 8 est une vue en coupe transversale des douze poinçons conformes à l'invention illustrés à la Fig. 7.
[Fig. 9] La Figure 9 est une vue schématique en coupe élévation d'un premier exemple de réalisation d'un dispositif de fabrication par extrusion conforme à l'invention.
[Fig. 10] La Figure 10 est une vue schématique en coupe élévation d'un deuxième exemple de réalisation d'un dispositif de fabrication par extrusion conforme à l'invention.
[Fig. 11A] La Figure 11A est une vue schématique en coupe élévation d'un troisième exemple de réalisation d'un dispositif de fabrication par extrusion conforme à l'invention.
[Fig. 11B] La Figure 11B est une vue schématique en perspective d'un porte-poinçons mis en œuvre dans l'exemple de réalisation du dispositif de fabrication illustré à la figure 11A.
[Fig. 12] La Figure 12 est une vue en perspective d'un exemple d'un support poreux obtenu à l'aide d'un dispositif de fabrication par extrusion conforme à l'invention mettant en œuvre un porte-poinçons illustré à la Fig. 5.

### Description des modes de réalisation

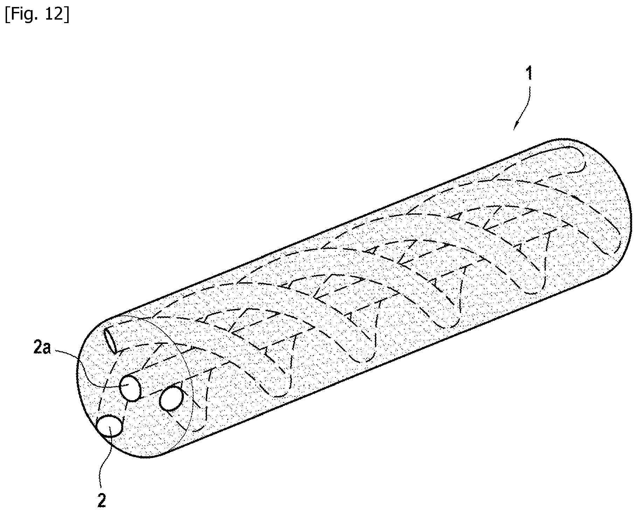

L'invention concerne la fabrication par extrusion, d'un support poreux 1, ainsi qu'une membrane de filtration comportant le support poreux 1 selon l'invention comprenant un canal rectiligne 2a centré sur un axe de symétrie du support poreux et au moins un canal 2 non rectiligne sur les parois desquelles sont déposées une ou plusieurs couches séparatrices (Fig. 12).

Dans le cadre de l'invention, on vise la fabrication de supports poreux céramiques 1 pour membranes de filtration d'un fluide, et plus particulièrement pour membranes de filtration tangentielle. De tels supports poreux sont dans le cadre de l'invention de géométrie tubulaire et comportent un canal rectiligne 2a et au moins un canal 2 ou chemin de circulation pour le fluide à filtrer. Ces canaux de circulation 2, 2a présentent une entrée et une sortie. L'entrée des canaux de circulation est positionnée à l'une des extrémités du support poreux, cette extrémité jouant le rôle de zone d'entrée pour le milieu fluide à traiter et leur sortie est positionnée à une autre extrémité du support poreux jouant le rôle de zone de sortie pour le rétentat. La zone d'entrée et la zone de sortie sont reliées par une zone périphérique continue au niveau de laquelle le perméat est récupéré.

Quand la porosité (le diamètre moyen de pores) du support fritté est adaptée au milieu fluide à traiter (seuil de filtration) ledit support fritté est directement utilisable en filtration et est désigné par auto-membrane ou membrane homogène.

Quand la porosité du support fritté n'est pas adaptée au milieu fluide à traiter (pores de trop grande dimension par rapport au seuil de filtration nécessaire), les parois du ou des canaux de circulation 2 sont continument recouvertes par au moins une couche séparatrice qui assure la filtration du milieu fluide à traiter. La ou les couches séparatrices sont poreuses et ont un diamètre moyen de pores inférieur à celui du support. La couche séparatrice peut être soit déposée directement sur le support poreux (cas d'une couche de séparation monocouche), ou encore sur une couche intermédiaire de diamètre moyen de pores moindre, elle-même déposée directement sur le support poreux (cas d'une couche de séparation multicouche). Ainsi, une partie du milieu fluide à filtrer traverse la ou les couches séparatrices et le support poreux, de sorte que cette partie traitée du fluide, appelée perméat, s'écoule par la surface périphérique extérieure du support poreux. Les couches séparatrices délimitent la surface de la membrane de filtration destinée à être en contact avec le fluide à traiter et au contact de laquelle circule le fluide à traiter.

La porosité du support poreux céramique 1 est ouverte, c'est-à-dire qu'elle forme un réseau de pores interconnectés dans les trois dimensions, ce qui permet au fluide filtré par la ou les couches séparatrices de traverser le support poreux et d'être récupéré en périphérie. Le perméat est donc récupéré sur la surface périphérique du support poreux.

Le support poreux 1 a un diamètre moyen de pores appartenant à la gamme allant de 0,5 µm à 50 µm. La porosité du support poreux 1 est comprise entre 10 et 60%, de préférence entre 20 et 50%.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales l'aire située sous la courbe des fréquences obtenue par pénétration de mercure. En particulier, on pourra utiliser la technique décrite dans la norme ISO 15901-1 :2005 pour ce qui concerne la technique de mesure par pénétration de mercure.

La porosité du support poreux, qui correspond au volume total des vides interconnectés (pores) présents dans la matière considérée, est une grandeur physique qui conditionne les capacités d'écoulement et de rétention dudit corps poreux. Pour que le matériau puisse être utilisé en filtration, la porosité ouverte interconnectée totale doit être au minimum de 10% pour un débit satisfaisant de filtrat à travers le support, et au maximum de 60% afin de garantir une résistance mécanique du support poreux adaptée.

La porosité d'un support poreux peut être mesurée en déterminant le volume d'un liquide contenu dans ledit corps poreux en pesant ledit matériau avant et après un séjour prolongé dans ledit liquide (eau ou autre solvant). Connaissant les masses volumiques respectives du matériau considéré et du liquide utilisé, la différence massique, convertie en volume, est directement représentative du volume des pores et donc de la porosité ouverte totale du support poreux.

D'autres techniques permettent de mesurer précisément la porosité ouverte totale d'un support poreux parmi lesquelles on peut citer :
- la porosimétrie par intrusion de mercure (norme ISO 15901-1 précitée) : injecté sous pression, le mercure remplit les pores accessibles aux pressions mises en œuvre, et le volume de mercure injecté correspond alors au volume des pores ;
- la diffusion aux petits angles : cette technique, qui utilise soit un rayonnement de neutrons, soit des rayons X, donne accès à des quantités physiques moyennées sur l'échantillon entier. La mesure consiste en l'analyse de la distribution angulaire de l'intensité diffusée par l'échantillon ;
- l'analyse d'images 2D obtenues par microscopie ;
- l'analyse d'images 3D obtenues par tomographie de rayons X.

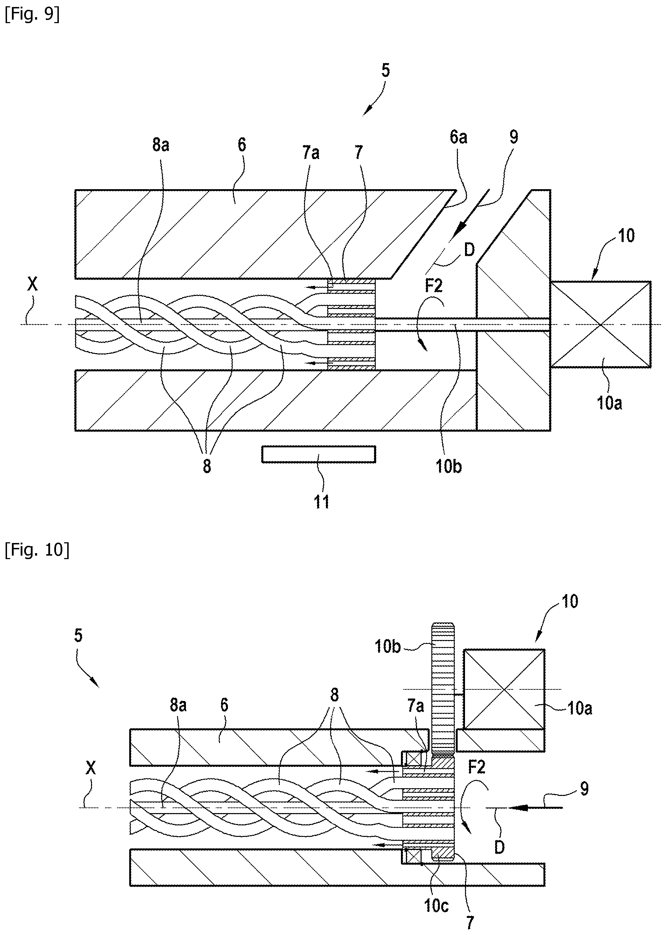

Le support tubulaire poreux 1 selon l'invention est préparé par le frittage d'un extrudat correspondant à l'objet extrudé à l'aide par exemple d'un dispositif 5 conforme à l'invention assurant la fabrication d'un support tubulaire poreux 1 à partir d'une composition céramique. Tel que cela ressort plus précisément des Fig. 9, 10, 11A et 11B, le dispositif 5 conforme à l'invention comporte une filière d'extrusion fixe 6 dans laquelle est monté un porte-poinçons 7 pourvu d'au moins deux poinçons 8, 8a. La filière d'extrusion fixe 6 définit la forme extérieure de l'extrudat qui sort de la filière d'extrusion et qui peut être, dans le cadre de l'invention, circulaire ou non circulaire (polygonale ou autres...). La filière d'extrusion fixe 6 délimite avec les poinçons 8, 8a, un espace libre ou orifice qui est traversé par la composition céramique.

Le dispositif 5 conforme à l'invention comporte également un dispositif d'alimentation 9 pour contraindre la composition céramique à franchir sous pression le porte-poinçons 7 pour traverser la filière d'extrusion 6 selon une vitesse linéaire d'extrusion VI. Par exemple, le système d'alimentation 9 est un système du type piston, pompe ou à vis sans fin de tous types connus en soi, permettant l'application d'une pression mécanique à la composition céramique. La vitesse linéaire d'extrusion VI est mesurée à la sortie de l'extrudat de la filière d'extrusion fixe 6 soit de façon discontinue par simple chronométrage, soit de façon continue par un capteur de vitesse linéaire à distance comme par exemple un vélocimètre laser Doppler.

Le support tubulaire poreux 1 est fabriqué par extrusion à partir d'une composition céramique traversant sous pression la filière d'extrusion fixe 6.

La composition céramique est composée d'une phase inorganique solide pulvérulente et d'une matrice.

La phase inorganique solide pulvérulente de la composition céramique comprend un ou plusieurs matériaux inorganiques solides, chacun sous la forme de particules de diamètre moyen compris entre 0,1 µm et 150 µm.

La notion de diamètre moyen est associée à celle de distribution de particules. En effet, les particules d'une poudre sont rarement de taille unique ou monodisperse et une poudre est donc le plus souvent caractérisée par une distribution de tailles de ses particules. Le diamètre moyen correspond alors à la moyenne d'une distribution des tailles des particules. La distribution peut être représentée de différentes manières, comme par exemple une distribution en fréquence ou cumulée. Certaines techniques de mesure donnent directement une distribution basée sur le nombre (microscopie) ou sur la masse (tamisage). Le diamètre moyen est une mesure de la tendance centrale.

Parmi les tendances centrales les plus utilisées on trouve ainsi le mode, la médiane et la moyenne. Le mode est le diamètre le plus fréquent dans une distribution : il correspond au maximum de la courbe de fréquence. La médiane représente la valeur d'où la fréquence totale des valeurs au-dessus et au-dessous est identique (autrement dit, on trouve le même nombre ou volume total de particules au-dessous de la médiane, qu'au-dessus). La moyenne doit quant à elle être calculée et elle détermine le point où les moments de la distribution sont égaux. Pour une distribution normale, le mode, la moyenne et la médiane coïncident, alors qu'ils diffèrent dans le cas d'une distribution non-normale.

Le diamètre moyen des particules constitutives d'une poudre inorganique peut être mesuré notamment par :
- diffraction de lumière laser pour des particules allant de 3 mm à environ 0,1 µm ;
- sédimentation/centrifugation ;
- diffusion dynamique de la lumière (en anglais, "dynamic light scattering (DLS)" pour des particules allant de 0,5 µm à 2 nm ;
- analyse d'images obtenues par microscopie ;
- diffraction de rayons X aux petits angles.

Par granularité de la phase inorganique solide pulvérulente, on entend les dimensions des particules composant la phase inorganique solide pulvérulente. La granularité est caractérisée par la notion de diamètre moyen qui est décrite ci-dessus.

Le plus souvent, la composition céramique comprend en tant que matériau(x) céramique(s) pulvérulent(s), seul ou en mélange, un oxyde et/ou un nitrure et/ou un carbure. A titre d'exemples d'oxydes pouvant convenir dans le cadre de l'invention, on peut notamment citer les oxydes métalliques, et en particulier l'oxyde de titane, l'oxyde de zirconium, l'oxyde d'aluminium et l'oxyde de magnésium, l'oxyde de titane étant préféré. A titre d'exemples de carbures, on peut notamment citer les carbures métalliques, et en particulier le carbure de silicium. A titre d'exemples de nitrures pouvant être utilisés, on peut citer notamment le nitrure de titane, le nitrure d'aluminium, et le nitrure de bore. Selon un mode préféré de réalisation, la composition céramique comprend au moins un oxyde métallique en tant que matériau inorganique pulvérulent, et de préférence l'oxyde de titane.

Dans le cadre de l'invention, la composition céramique possède une rhéologie adaptée en termes de plasticité pour son extrusion au travers de la filière d'extrusion fixe 6.

Selon un premier mode de réalisation, la matrice de la composition céramique comprend un ou plusieurs solvants. Le ou les solvants peuvent être aqueux ou organiques. A titre d'exemples, on peut citer l'eau, l'éthanol ou encore l'acétone.

De plus, la matrice de la composition céramique comprend un ou plusieurs additifs organiques. Avantageusement, ces additifs organiques sont solubles dans le ou les solvants de la matrice. Le ou les additifs organiques convenant dans le cadre de l'invention peuvent être choisis à titre d'exemples non limitatifs parmi :
- les liants, et par exemple parmi les éthers de cellulose tels que l'hydroxyéthylcellulose qui est un polymère, la gomme arabique qui est un polysaccharide, ou le polyéthylène glycol (PEG) ;
- les lubrifiants et plastifiants, et par exemple parmi le glycérol ou l'acide stéarique ;
- les épaississants et gélifiants, et par exemple parmi la gomme xanthane ou l'agar-agar qui est un polymère de galactose.

La teneur massique en matériau(x) inorganique(s) pulvérulent(s) dans la composition céramique peut aller de 50 à 90%, préférentiellement entre 80 et 85 % en poids, par rapport au poids total de la composition céramique.

La teneur massique en matrice dans la composition céramique peut aller de 10 % à 50 % en poids, préférentiellement de 15 à 20 % en poids, par rapport au poids total de la composition céramique.

**Cette** composition céramique n'est pas une poudre mais une pâte. Il est possible d'ajuster la rhéologie de cette composition céramique grâce à la granularité de la phase inorganique solide pulvérulente, et/ou grâce à la nature des additifs organiques lorsqu'ils sont présents et/ou grâce à leurs proportions respectives. En effet, par exemple, l'utilisation d'une matrice comportant un ou plusieurs additifs organiques solubles dans un ou plusieurs solvants compris dans la matrice permet de modifier la rhéologie de la composition céramique.

Selon un deuxième mode de réalisation, la composition céramique comprend une matrice constituée d'un ou plusieurs polymères thermofusibles. La matrice est de nature organique et solide à température ambiante.

Par « polymère thermofusible », on entend un polymère qui se ramollit sous l'effet de la chaleur.

A titre d'exemples de polymère thermofusible pouvant convenir dans le cadre de l'invention, on peut citer, utilisés seuls ou en mélange dans la matrice, les polymères ou famille de polymères suivants, éventuellement fonctionnalisés : l'acide polylactique (PLA), l'alcool polyvinylique (PVA), l'acrylonitrile butadiène styrène (ABS), le polyprolylène (PP), le polyéthylène, le polyéthylène téréphtalate (PET), le polyuréthane thermoplastique (TPU), les polyoléfines, les élastomères thermoplastiques (TPE), les élastomères base polyoléfine (TPE-O) et le polycarbonate.

La teneur massique en matériau(x) inorganique(s) pulvérulent(s) dans la composition céramique peut aller de 40 à 95 %, préférentiellement entre 70 et 90 % en poids, par rapport au poids total de la composition céramique.

Dans le cadre de l'invention, la composition céramique, de préférence sous forme de granulé, est préchauffée en amont dans le dispositif d'alimentation 9 de sorte que le ou les polymères thermofusibles ramollissent de manière que la composition céramique puisse être mise sous pression en amont de la tête d'extrusion fixe 6. De manière usuelle, la tête d'extrusion fixe 6 est chauffée pour ramollir le ou les polymères thermofusibles permettant alors l'extrusion de la composition céramique. La température de la tête d'extrusion fixe 6 peut être ajustée en fonction du ou des polymères thermofusibles présents dans la composition céramique.

De plus, dans le cadre de l'invention, il est possible d'ajuster la rhéologie de la composition céramique grâce à sa température dans la tête d'extrusion fixe, et/ou la granularité de la phase inorganique solide pulvérulente, et/ou grâce à la nature du ou des polymères thermofusibles et/ou grâce à leurs proportions.

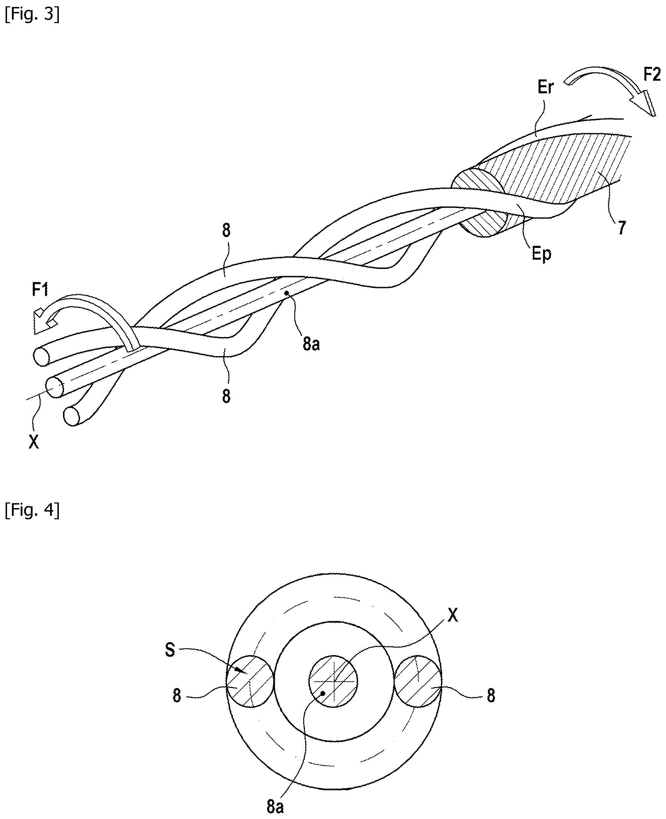

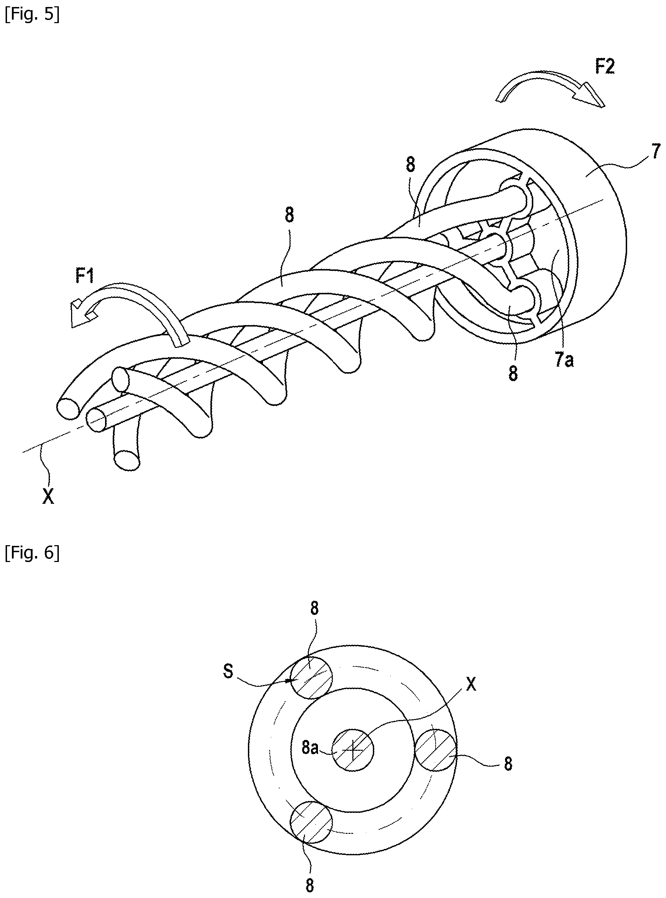

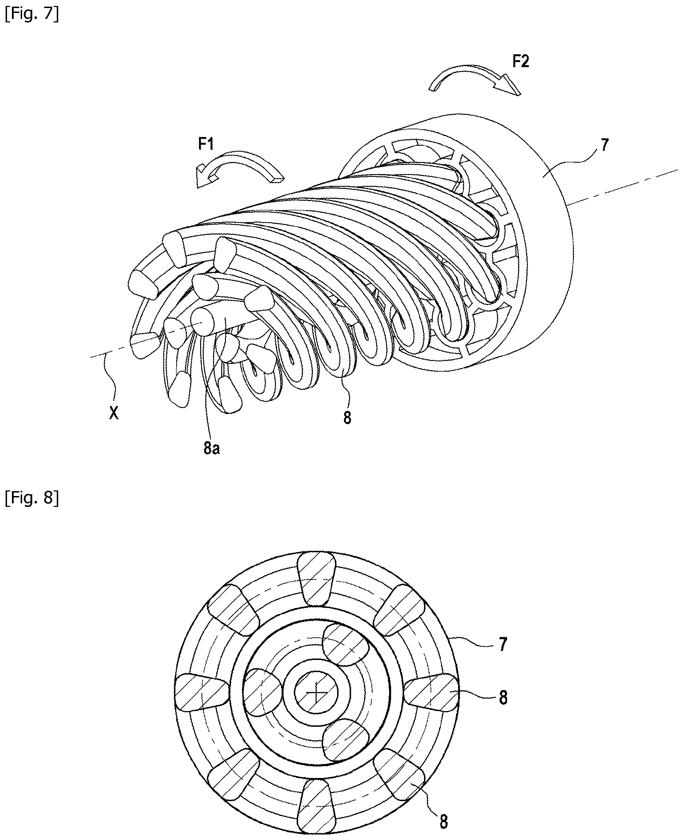

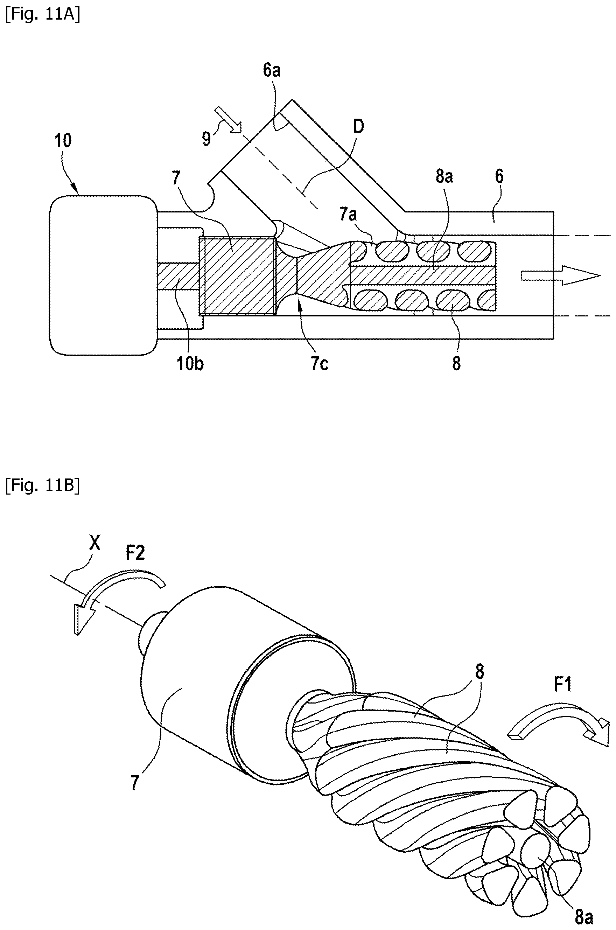

Conformément à l'invention, le porte-poinçons 7 est muni d'un poinçon rectiligne 8a centré sur l'axe de symétrie X du porte-poinçons 7. Le poinçon rectiligne 8a est de section circulaire. Le porte-poinçons 7 est également pourvu d'au moins un poinçon 8 ayant une forme hélicoïdale enroulée autour d'un axe de symétrie X selon un sens d'enroulement F1. Dans l'exemple illustré à la Fig. 2, le porte-poinçons 7 est muni du poinçon rectiligne centré 8a et d'un unique poinçon 8 ayant une forme hélicoïdale, et conforme à l'invention. Bien entendu, le porte-poinçons 7 peut être pourvu, en supplément du poinçon rectiligne centré 8a, d'un nombre différents de poinçons 8 ayant une forme hélicoïdale conforme à l'invention, comme par exemple au nombre de deux (Fig. 3 et 4), trois (Fig. 5 et 6), 11 poinçons (Fig. 7 et 8) ou 7 poinçons (figure 11B).

D'une manière générale, un poinçon 8 ayant une forme hélicoïdale est un poinçon dont la forme suit, sans noyau central, celle d'une hélice circulaire. Un poinçon 8 ayant une forme hélicoïdale comporte un corps avec une section droite S s'étendant uniquement selon une hélice circulaire H enroulée autour de l'axe de symétrie X. Dans la mesure où le poinçon 8 de forme hélicoïdale ne comporte pas de noyau central, ce poinçon hélicoïdal 8 forme exclusivement des spires circulaires enroulées autour, le long et en dehors de l'axe de symétrie X. Cette hélice circulaire H correspond à une courbe inscrite sur un cylindre de révolution autour d'un axe correspondant à l'axe de symétrie X, la tangente à cette courbe faisant un angle constant avec l'axe de symétrie. Bien entendu, ce cylindre de révolution sur lequel s'appuie l'hélice circulaire H correspond à un espace vide du poinçon hélicoïdal 8 puisque ce dernier ne comporte pas de matière centrée sur l'axe de symétrie X mais possède exclusivement un corps hélicoïdal. Tous les points appartenant à cette section droite S sont situés à une distance constante non nulle R de l'axe de symétrie X. En d'autres termes, le corps hélicoïdal du poinçon 8 est enroulé autour de l'axe de symétrie X sans être traversé par cet axe de symétrie X.

II est à noter que la section droite S des poinçons 8 de forme hélicoïdale peut présenter différentes formes adaptées aux formes souhaitées pour les canaux 2 du support poreux 1. Par exemple, chaque poinçon 8 ayant une forme hélicoïdale comporte une section ronde dans les exemples des Fig. 2, 3-4 et 5-6. Selon l'exemple de réalisation illustré aux Fig. 7 et 8, les huit poinçons 8 ayant une forme hélicoïdale et appartenant à la couronne externe présentent tous une même section pseudo-rectangulaire alors que les trois poinçons 8 ayant une forme hélicoïdale et appartenant à la couronne interne présentent tous une même section pseudo ovoïde. Selon l'exemple de réalisation illustré aux Fig. 11A et 11B, les sept poinçons 8 ayant une forme hélicoïdale et appartenant à la couronne externe présentent tous une même section pseudo-triangulaire. A noter cependant qu'il n'y a pas obligation à ce que les poinçons d'une même couronne aient des sections identiques. Il est à noter que la forme de la section des poinçons 8, 8a correspond à la forme des canaux 2 dans l'extrudat obtenu à l'aide du dispositif 5 conforme à l'invention.

Plus précisément, c'est la forme de la section droite à l'extrémité d'un poinçon qui détermine la forme de la section droite du canal formé dans l'extrudat. L'extrémité d'un poinçon correspond à la section perpendiculaire à l'axe de symétrie X qui est parallèle à la direction d'avancement de l'extrudat. Un élargissement final ou intermédiaire du poinçon peut être avantageux quant à la compression de la composition céramique. Dans l'exemple illustré à la figure 2, le poinçon rectiligne centré 8a et le poinçon 8 de forme hélicoïdale présentent un élargissement au niveau de leur extrémité. Bien entendu, les sections du poinçon rectiligne centré 8a et du ou des poinçons 8 de forme hélicoïdale peuvent varier en tous autres endroits. En tout état de cause, la section droite terminale d'un poinçon est celle qui dans tous les cas donne sa forme à la section du canal.

Chaque poinçon 8 de forme hélicoïdale est enroulé autour de l'axe de symétrie X selon un unique sens d'enroulement déterminé à savoir un sens d'enroulement dextrogyre (sens horaire) ou un sens d'enroulement lévogyre (sens antihoraire). Dans l'exemple illustré sur la Fig. 2, le poinçon 8 de forme hélicoïdale est enroulé autour de l'axe de symétrie X selon un sens d'enroulement dextrogyre F1. Selon une caractéristique de l'invention, lorsque le porte-poinçons 7 est pourvu de plusieurs poinçons de forme hélicoïdale, tous les poinçons 8 de forme hélicoïdale équipant un porte-poinçons 7 sont enroulés autour de l'axe de symétrie X selon un même sens d'enroulement F1. Ainsi, tous les poinçons 8 de forme hélicoïdale équipant un porte-poinçons 7 présentent un sens d'enroulement par exemple dextrogyre dans les exemples illustrés aux Fig. 3, 5, 7 et 11B.

De plus, selon une autre caractéristique de l'invention tous les poinçons 8 de forme hélicoïdale équipant un porte-poinçons 7 sont enroulés de façon concentrique autour d'un même axe de symétrie X. Ainsi, le porte-poinçons 7 comporte un axe de symétrie X qui est commun à l'ensemble des poinçons 8 de forme hélicoïdale.

Selon une caractéristique préférée de réalisation, les poinçons 8 de forme hélicoïdale équipant un porte-poinçons 7 sont répartis de manière symétrique autour de l'axe de symétrie X, comme cela apparait clairement aux Fig. 4, 6, 8 et 11B par exemple. Selon une variante de réalisation, les poinçons 8 de forme hélicoïdale sont montés sur le porte-poinçons 7 de manière à être disposés selon au moins deux couronnes concentriques comme cela apparait dans l'exemple de réalisation illustré aux Fig. 7 et 8. Ainsi, le porte-poinçons 7 est pourvu d'une première série de huit poinçons 8 de forme hélicoïdale disposés selon une couronne externe qui est concentrique à une couronne interne selon laquelle sont répartis trois poinçons 8 de forme hélicoïdale. Avantageusement, les huit poinçons 8 de forme hélicoïdale sont distribués angulairement de manière régulière selon la couronne externe tandis que les trois poinçons 8 de forme hélicoïdale sont aussi répartis angulairement de manière régulière sur la couronne interne.

Chaque poinçon 8 de forme hélicoïdale est enroulé autour de l'axe de symétrie X selon un pas d'enroulement P déterminé. Le pas P d'un poinçon 8 de forme hélicoïdale correspond à la distance prise sur l'hélice entre les deux points consécutifs d'intersection avec une droite parallèle à l'axe de symétrie X. Selon une caractéristique de l'invention, lorsque le porte-poinçons 7 est pourvu de plusieurs poinçons de forme hélicoïdale, tous les poinçons 8 de forme hélicoïdale équipant un porte-poinçons 7 possèdent un même pas d'enroulement P.

Avantageusement, le pas d'enroulement P qui, exprimé en °/mm, est compris entre 1° et 90°/mm. De préférence, le pas d'enroulement est compris entre 3,6° et 36°/mm en considérant qu'un pas d'enroulement de 3,6°/mm équivaut à un pas d'enroulement de 100 mm et qu'un pas d'enroulement de 36°/mm équivaut à un pas d'enroulement de 10 mm. Comme cela sera mieux compris dans la suite de la description, le pas d'enroulement P du poinçon de forme hélicoïdale correspond au pas des canaux 2 obtenus dans l'extrudat.

Il doit être noté que chaque poinçon 8 possède une partie de forme hélicoïdale entre une extrémité distale Ed et une extrémité proximale Ep. Selon une caractéristique de l'invention, chaque poinçon 8 possède une partie de forme hélicoïdale dont la longueur prise suivant l'axe de symétrie X est égale ou supérieure au quart du pas d'enroulement P.

Chaque poinçon 8, 8a est fixé de toute manière appropriée au porte-poinçons 7. Les poinçons 8, 8a s'étendent ainsi en saillie ou en porte à faux selon un côté du porte-poinçons 7. Typiquement, la partie de forme hélicoïdale du poinçon 8 prise entre une extrémité distale Ed et une extrémité proximale Ep est prolongée par une partie de raccordement ou de fixation Er au porte-poinçons. Par exemple dans l'exemple illustré à la Fig. 3, le poinçon 8 de forme hélicoïdale se prolonge au-delà de son extrémité proximale Ep, par une partie de raccordement Er de forme hélicoïdale fixée sur le porte-poinçons 7 tandis que le poinçon rectiligne centré 8a est fixé sur l'extrémité du porte-poinçons 7. Dans l'exemple illustré à la figure 2, le poinçon 8 de forme hélicoïdale se prolonge au-delà de son extrémité proximale Ep, par une partie de raccordement Er de forme rectiligne, faisant partie du poinçon rectiligne centré 8a et fixée au porte-poinçons 7. Dans les exemples illustrés aux figures 5 et 7, les poinçons 8 de forme hélicoïdale sont emmanchés dans le porte-poinçons 7, par la partie de raccordement Er tandis que l'extrémité du poinçon rectiligne centré 8a est également emmanchée dans le porte-poinçons 7. Dans l'exemple illustré aux figures 11A, 11B, les parties de raccordement Er des poinçons 8 de forme hélicoïdale convergent vers la partie centrale du porte-poinçons 7 et plus précisément autour de l'extrémité du poinçon rectiligne centré 8a. Comme cela ressort des dessins, les parties de raccordement Er des poinçons 8 de forme hélicoïdale forment ensemble un cône convergent vers le porte-poinçons 7, permettant de délimiter autour, un volume de collecte 7c dont la fonction apparaitra dans la suite de la description.

II est à noter que le porte-poinçons 7 et les poinçons 8, 8a peuvent être réalisés de toute manière appropriée. Par exemple, le porte-poinçons 7 et les poinçons 8, 8a peuvent se présenter sous la forme d'une pièce monobloc obtenue par électroérosion par exemple. Selon un autre mode de fabrication, les poinçons 8, 8a peuvent être séparément fabriqués puis fixés par exemple par sertissage sur le porte-poinçons 7 ou dans des logements aménagés dans le porte-poinçons 7. Classiquement, le porte-poinçons 7 est conçu ou aménagé pour présenter un ou plusieurs passages 7a permettant à la composition céramique de traverser le porte-poinçons. Il est à noter que le porte-poinçons 7 illustré aux figures 11A, 11B n'est pas ajouré mais plein dans la mesure où les parties de raccordement Er des poinçons et les poinçons entre eux délimitent des espaces pour le passage de la composition céramique arrivant latéralement en périphérie.

Conformément à l'invention, le dispositif 5 comporte un système d'entraînement en rotation 10 du porte-poinçons 7. Le système d'entraînement en rotation 10 peut être réalisé de toute manière appropriée pour assurer la rotation du porte-poinçons autour de l'axe de symétrie X selon une vitesse de rotation déterminée et selon un sens de rotation déterminée. Par exemple, ce système d'entraînement en rotation 10 peut comporter un moteur par exemple électrique relié directement ou par une transmission au porte-poinçons 7 et dont le fonctionnement est piloté par un dispositif de commande. Avantageusement, la vitesse de rotation du moteur est réglable de manière à pouvoir régler la vitesse de rotation du porte-poinçons 7.

**Selon** une caractéristique de l'invention, le système d'entraînement 10 entraîne en rotation le porte-poinçons 7 autour de l'axe de symétrie X, selon un sens de rotation F2 inverse du sens d'enroulement F1 du ou des poinçons 8. Ainsi, comme cela apparaît plus précisément aux Fig. 9, 10 et 11A, le porte-poinçons 7 est entrainé en rotation dans le sens lévogyre F2 puisque les poinçons 8 de forme hélicoïdale équipant le porte-poinçons 7 possèdent un sens d'enroulement dextrogyre F1. Bien entendu, il peut être prévu que le système d'entraînement 10 entraîne en rotation le porte-poinçons 7 selon un sens de rotation dextrogyre si les poinçons 8 de forme hélicoïdale équipant le porte-poinçons 7 possèdent un sens d'enroulement lévogyre.

Selon une caractéristique de l'invention, le système d'entraînement 10 entraîne en rotation le porte-poinçons 7 selon une vitesse de rotation synchronisée avec la vitesse linéaire d'extrusion VI de la composition céramique. Il doit être compris que vitesse de rotation du porte-poinçons 7 est synchronisée avec la vitesse linéaire d'extrusion VI de la composition céramique de manière que le tronçon de composition céramique en cours d'extrusion dans la filière d'extrusion 6 ne se trouve pas entraîné en rotation c'est-à-dire aussi que ce tronçon de composition céramique n'est pas soumis à une torsion. Ce tronçon de composition céramique avance strictement linéairement dans la filière d'extrusion 6 grâce au fait que chaque poinçon 8 de forme hélicoïdale en tournant se retire (se « dévisse ») progressivement du tronçon de matière céramique à l'intérieur duquel il se trouve et qui avance concomitamment linéairement dans la filière.

Selon une caractéristique de l'invention, le système d'entraînement 10 entraîne en rotation le porte-poinçons 7 avec une vitesse de rotation Vr égale à la vitesse linéaire d'extrusion VI de la composition céramique, divisée par le pas d'enroulement P des poinçons 8 de forme hélicoïdale. Soit la relation Vr=VI/P, avec Vr exprimée par exemple en tours par minute, VI exprimée par exemple en centimètres par minute et P exprimé par exemple en centimètres. Selon l'invention, il est considéré que le pas d'enroulement P des poinçons hélicoïdaux est prédéfini et que l'égalité Vr=VI/P peut être obtenue en jouant soit uniquement sur la vitesse de rotation du porte-poinçons 7 soit uniquement sur la vitesse linéaire d'extrusion soit sur la vitesse de rotation du porte-poinçons 7 et sur la vitesse linéaire d'extrusion.

II est à noter que la relation d'égalité ci-dessus est considérée comme respectée en tenant compte d'une marge de tolérance de plus ou moins 15%. Ainsi, la quantité VI/P (en tour par mn) est égale à la quantité Vr (en tour par mn) si l'écart entre ses deux quantités varie de plus ou moins 15%. Dans cette plage de tolérance, même si le tronçon de composition céramique n'avance pas strictement linéairement dans la filière d'extrusion fixe 6, les poinçons hélicoïdaux 8 assurent l'extrusion de ce tronçon de composition céramique avec une forme acceptable dans l'extrudat. Typiquement, pour un pas P égal à 10 cm et pour une vitesse linéaire d'extrusion VI égale à 200 cm/mn alors la vitesse de rotation Vr du porte-poinçons 7 doit être comprise entre 17 et 23 tours par mn.

La Fig. 9 illustre un premier exemple de réalisation du dispositif 5 conforme à l'invention dans lequel le système d'entraînement en rotation 10 du porte-poinçons 7 est situé à l'arrière du porte-poinçons 7. Selon cet exemple de réalisation illustré, le système d'entraînement en rotation 10 comporte un moteur 10a entrainant en rotation un arbre de liaison 10b fixé au porte-poinçons 7 en étant centré sur l'axe de symétrie X, sur la face opposée de celle à partir desquelles les poinçons s'étendent en saillie. Compte tenu du montage du système d'entraînement en rotation 10 à l'arrière et dans l'axe du porte-poinçons 7, l'axe de symétrie X du porte-poinçons 7 fait un angle inférieur ou égal à 90° par rapport à la direction d'alimentation du système d'alimentation 9. Le système d'alimentation 9 est situé ainsi sur le côté du porte-poinçons 7 avec une entrée 6a aménagée latéralement dans la filière d'extrusion fixe 6 selon une direction D faisant par rapport à l'axe de symétrie, un angle inférieur ou égal à 90°, par exemple autour de 45°. Le système d'alimentation 9 débouche par son entrée 6a, en amont du porte-poinçons 7 selon le sens de progression de la composition céramique. Les passages 7a aménagés dans le porte-poinçons 7 permettent à la composition céramique de traverser le porte-poinçons.

La Fig. 10 illustre un deuxième exemple de réalisation du dispositif 5 conforme à l'invention dans lequel le système d'entraînement en rotation 10 du porte-poinçons 7 est situé sur le côté du porte-poinçons 7. Le système d'entraînement en rotation 10 du porte-poinçons est monté ainsi en aval du système d'alimentation 9 par rapport au sens de déplacement de la composition céramique. Selon cet exemple, l'axe de symétrie X du porte-poinçons est parallèle à la direction d'alimentation D du système d'alimentation 9. Le système d'alimentation 9 peut ainsi être situé à l'arrière du porte-poinçons 7 de sorte que les passages 7a aménagés dans le porte-poinçons 7 permettent à la composition céramique de traverser le porte-poinçons. Selon l'exemple de réalisation illustré, le système d'entraînement en rotation 10 comporte un moteur 10a entrainant latéralement en rotation le porte-poinçons 7, à l'aide d'une transmission comportant un pignon 10b calé en rotation avec l'arbre de sortie moteur et s'engrenant avec une couronne dentée 10c aménagée en périphérie du porte-poinçons 7.

La figure 11A illustre un troisième exemple de réalisation du dispositif 5 conforme à l'invention dans lequel le système d'alimentation 9 est situé sur le côté du porte-poinçons 7 avec une entrée 6a aménagée latéralement dans la filière d'extrusion fixe 6 selon une direction D faisant par rapport à l'axe de symétrie, un angle inférieur ou égal à 90°, par exemple autour de 45°. L'entrée 6a du système d'alimentation 9 est aménagée pour déboucher latéralement aux poinçons 8, 8a et plus précisément au niveau du volume de collecte 7c entourant les parties de raccordement Er des poinçons 8 de forme hélicoïdale. Il est à noter les poinçons 8, 8a laissent subsister entre eux, des espaces permettant le passage de la composition céramique afin qu'elle remplisse complétement la filière d'extrusion 6. Le système d'alimentation 9 débouche par son entrée 6a, en aval du porte-poinçons 7 selon le sens de progression de la composition céramique. Selon cet exemple de réalisation illustré, le système d'entraînement en rotation 10 comporte un moteur entrainant en rotation un arbre de liaison 10b fixé au porte-poinçons 7 en étant centré sur l'axe de symétrie X, sur la face opposée de celle à partir desquelles les poinçons s'étendent en saillie.

II est à noter que le dispositif 5 conforme à l'invention peut comporter un système de chauffage 11 de la filière d'extrusion 6 pour maintenir le porte-poinçons 7, le ou les poinçons 8, 8a et la composition céramique à une température déterminée, comprise entre 50°C et 300°C. Le système de chauffage 11 peut être réalisé par tous systèmes adaptés pour maintenir à une température homogène la filière d'extrusion 6, le porte-poinçons 7, le ou les poinçons 8, 8a et la composition céramique. Ce système de chauffage 11 est mis en œuvre notamment lorsque la filière d'extrusion fixe 6 est alimentée avec une composition céramique comportant une première phase inorganique solide pulvérulente sous la forme de particules de diamètre moyen compris entre 0,1 et 150 micromètres et une seconde phase sous la forme d'une matrice comprenant au moins un polymère thermo fusible.

La mise en œuvre du dispositif 5 conforme à l'invention de fabrication par extrusion, d'un support tubulaire poreux 2 découle directement de la description qui précède.

Il convient tout d'abord de mettre à disposition un dispositif d'extrusion 5 comportant une filière d'extrusion fixe 6 dans laquelle est monté un porte-poinçons 7 pourvu d'un poinçon rectiligne 8a centré sur l'axe de symétrie X et d'au moins un poinçon 8 ayant une forme hélicoïdale enroulée autour d'un axe de symétrie X selon un sens d'enroulement et un pas d'enroulement P. Pour la fabrication d'un support tubulaire poreux à partir d'une composition céramique, le procédé consiste :
- à assurer que la composition céramique franchisse le porte-poinçons 7 pour traverser la filière d'extrusion 6 selon une vitesse linéaire d'extrusion ;
- et à assurer l'entraînement en rotation du porte-poinçons 7 selon un sens de rotation inverse du sens d'enroulement du poinçon 8 de forme hélicoïdale et avec une vitesse de rotation synchronisée avec la vitesse linéaire d'extrusion de la composition céramique.

Avantageusement, on entraîne en rotation le porte-poinçons 7 avec une vitesse de rotation égale à la vitesse linéaire d'extrusion de la composition céramique, divisée par le pas d'enroulement P du ou des poinçons 8 ayant une forme hélicoïdale.

Afin que la vitesse de rotation du porte-poinçons 7 soit égale à la vitesse linéaire d'extrusion de la composition céramique, divisée par le pas d'enroulement P, le procédé consiste à agir sur le réglage soit uniquement de la vitesse de rotation du porte-poinçons 7 soit uniquement sur la vitesse linéaire d'extrusion réglée par le débit du dispositif d'alimentation 9 soit sur la vitesse de rotation du porte-poinçons 7 et sur la vitesse linéaire d'extrusion réglée par le débit du dispositif d'alimentation 9.

Il est rappelé que la filière d'extrusion fixe 6 est alimentée à l'aide du dispositif d'alimentation 9, par une composition céramique de tous types. De préférence, la composition céramique comporte une phase inorganique solide pulvérulente sous la forme de particules de diamètre moyen compris entre 0,1 et 150 micromètres et une matrice. Selon un autre exemple, la filière d'extrusion fixe 6 est alimentée à l'aide du dispositif d'alimentation 9, par une composition céramique comportant une première phase inorganique solide pulvérulente sous la forme de particules de diamètre moyen compris entre 0,1 et 150 micromètres et une seconde phase sous la forme d'une matrice comprenant au moins un polymère thermo fusible. Bien entendu, le dispositif d'alimentation 9 est adapté pour assurer que la composition céramique amenée à la filière d'extrusion fixe 6 présente toutes les caractéristiques notamment de pression et de malléabilité pour obtenir une extrusion efficace.

En sortie de la filière d'extrusion fixe 6, l'extrudat est récupéré pour être classiquement découpé au fur et à mesure, à une longueur déterminée pour former des supports tubulaires poreux 1. Chaque extrudat correspondant à une longueur d'un support tubulaire poreux est soumis classiquement à un post traitement de frittage de tous types connus en soi. Après ce post traitement de frittage de l'extrudat, il est obtenu un support tubulaire poreux 1 comportant un canal rectiligne 2a centré sur l'axe de symétrie du support et au moins un canal de circulation 2 d'un milieu fluide à traiter avec une forme hélicoïdale issue de l'empreinte d'un poinçon 8 avec une forme hélicoïdale. De manière classique, il est connu que le post traitement de frittage conduit notamment à un retrait dimensionnel du support tubulaire poreux par rapport à l'extrudat correspondant. Ce retrait de frittage peut être compris entre 5 et 25% et plus précisément entre 12 et 15%. Comme la forme hélicoïdale des canaux 2 obtenue dans l'extrudat correspond à la forme en négatif des poinçons hélicoïdaux 8, la définition des caractéristiques des poinçons hélicoïdaux tient compte de ce retrait de frittage afin d'obtenir après frittage, dans le support poreux tubulaire, des canaux 2 présentant les caractéristiques dimensionnelles définitives souhaitées. Après frittage, le diamètre hydraulique et le pas des canaux 2 sont diminués. Ainsi, notamment le pas d'enroulement P, les formes et les dimensions des sections droites des poinçons hélicoïdaux 8 tiennent compte de ce retrait de frittage. Il en est de même pour le canal rectiligne 2a centré sur l'axe de symétrie du support.

Un tel procédé de fabrication permet d'obtenir par extrusion, un support tubulaire poreux se présentant sous la forme d'un corps poreux céramique monolithique dans lequel sont aménagés un canal rectiligne 2a centré correspondant à l'empreinte du poinçon rectiligne 8a et au moins un canal 2 de circulation d'un milieu fluide à traiter avec une forme hélicoïdale correspondant à l'empreinte d'un poinçon 8 avec une forme hélicoïdale. La mise en pression de la matière à extruder en amont de la filière comprime dans la filière les grains de poudre de la phase inorganique solide pulvérulente contre les surfaces des poinçons 8, 8a. La mise en pression de la matière à extruder ne sert pas uniquement à générer la vitesse linéaire VL mais elle sert aussi dans le cadre de l'invention à comprimer la matière contre les surfaces des poinçons 8, 8a. Il s'ensuit un effet de lissage pariétal de la matière qui perdure après frittage au niveau des parois des canaux. Les canaux 2, 2a présentent en conséquence une rugosité pariétale limitée, inférieure à la granularité de la phase inorganique solide pulvérulente utilisée dans la composition céramique extrudée. Les parois des canaux 2, 2a présentent une rugosité pariétale avec des aspérités au toucher inférieures à la granularité de la phase inorganique solide pulvérulente utilisée dans la composition céramique extrudée.

La mesure de la rugosité pariétale des parois des canaux 2, 2a peut être réalisée selon toutes les manières appropriées connues. Par exemple, il peut être utilisé un rugosimètre dont le palpeur est déplacé sur une ou plusieurs génératrices du canal. L'écart moyen arithmétique, notée Ra, qui indique la rugosité moyenne de la surface contrôlée, caractérise directement l'état de la surface en général. Le résultat de la mesure, obtenu suivant la norme ISO 21920, est exprimé en microns. Il est comparé à la granularité de la phase inorganique solide pulvérulente de la composition céramique caractérisée par le diamètre moyen des particules de la phase inorganique solide pulvérulente utilisée dans la composition céramique extrudée.

La paroi du ou des canaux 2, 2a de circulation du milieu fluide à traiter du support poreux tubulaire peut être revêtue par au moins une couche séparatrice de manière à constituer une membrane de filtration tangentielle. Typiquement, un tel support tubulaire 1 après avoir subi une opération classique de frittage constitue un élément rigide apte à supporter une pression interne d'au moins 10 bars sans éclatement et de préférence au moins 30 bars sans éclatement et avantageusement au moins 50 bars sans éclatement. Une pression d'éclatement correspond, selon l'invention, à la pression à laquelle un support dont on a préalablement obstrué la porosité (avec une matière thermo-fusible comme par exemple de la paraffine) éclate sous l'effet d'une surpression interne par rapport à la pression extérieure au support ; cette surpression étant appliquée dans les canaux avec de l'eau, la pression extérieure au support étant la pression atmosphérique.

Il ressort de la description qui précède que le dispositif 5 conforme à l'invention permet de fabriquer facilement, par extrusion un support tubulaire poreux 1 avec des canaux 2 de forme hélicoïdale apte à générer des turbulences pour augmenter le flux de filtrat en réduisant le phénomène de colmatage. La fabrication des supports tubulaires par extrusion permet d'obtenir une cadence de production très supérieure à celle des méthodes additives. La vitesse linéaire d'extrusion, qui se compte à l'échelle de la minute, est en effet généralement égale ou supérieure à un mètre par minute tandis que la vitesse d'impression verticale des méthodes additives est généralement au mieux d'une dizaine d'heures par mètre. Il est à noter que la vitesse d'impression verticale des méthodes additives est fortement dépendante du nombre de canaux. Elle diminue quand le nombre de canaux augmente et un support multicanaux sera ainsi imprimé selon le nombre de canaux deux à dix fois plus lentement qu'un support monocanal tandis que la vitesse linéaire d'extrusion reste indépendante du nombre de canaux.

Par ailleurs, lors de l'extrusion dans la filière, la composition céramique n'est pas entraînée en rotation ou n'est pas soumise à une torsion qui sinon altéreraient les propriétés mécaniques de l'extrudat.

La forme hélicoïdale des canaux 2 obtenue dans l'extrudat correspond à la forme en négatif des poinçons 8 hélicoïdaux. Le nombre, le pas d'enroulement P, la disposition et les formes et dimensions des sections des poinçons 8 hélicoïdaux offrent une liberté dans la définition des canaux 2 aménagés dans le support tubulaire poreux.

Il est à noter que le pas d'enroulement obtenu dans l'extrudat est prédéfini par le poinçon 8 de forme hélicoïdale et que ce sont la vitesse de rotation Vr du porte-poinçons 7 et la vitesse linéaire VI de la composition céramique dans la filière qui doivent être conjointement adaptées à ce pas d'enroulement prédéfini. Le poinçon 8 de forme hélicoïdale définit dans l'extrudat non seulement la section du canal 2 dont il est le négatif mais aussi le pas du canal. Ainsi, le pas d'enroulement P du poinçon 8 de forme hélicoïdale détermine l'efficacité du décolmatage.

Chaque canal 2 présente ainsi un volume flexueux de circulation entre les extrémités du support tubulaire poreux. Ce volume flexueux de circulation correspond bien entendu à une zone du support poreux 1 ne comportant pas de matière poreuse, et limitée par les parois du canal. Il est à noter que le support tubulaire poreux 1 présente selon une section droite perpendiculaire à son axe longitudinal, entre sa surface extérieure et la paroi du canal 2, une épaisseur variable.

## Revendications

1. Support tubulaire poreux (1) pour membrane de filtration tangentielle, se présentant sous la forme d'un corps poreux céramique monolithique fritté, fabriqué par extrusion d'une composition céramique comportant une phase inorganique solide pulvérulente et dans lequel sont aménagés par extrusion à l'aide de poinçons, un canal rectiligne (2a) centré sur un axe de symétrie du support et au moins un canal de circulation (2) d'un milieu fluide à traiter avec une forme hélicoïdale enroulée autour de l'axe de symétrie, les canaux présentant une rugosité pariétale limitée et inférieure à la granularité de la phase inorganique solide pulvérulente de la composition céramique.

2. Support tubulaire poreux selon la revendication 1 selon lequel le corps poreux céramique monolithique fritté supporte une pression interne d'au moins 10 bars sans éclatement.

3. Membrane de filtration tangentielle selon laquelle au moins une couche séparatrice revêt la paroi des canaux de circulation (2, 2a) du milieu fluide à traiter du support poreux tubulaire (1) selon les revendications 1 ou 2.

4. Dispositif pour la fabrication par extrusion, d'un support tubulaire poreux (1) à partir d'une composition céramique, le dispositif comportant :
- une filière d'extrusion fixe (6) dans laquelle est monté un porte-poinçons (7) pourvu d'au moins un poinçon (8) ;
- un système d'entraînement en rotation (10) du porte-poinçons (7) ;
- et un dispositif d'alimentation (9) pour contraindre la composition céramique à franchir sous pression le porte-poinçons (7) pour traverser la filière d'extrusion (6) selon une vitesse linéaire d'extrusion (VI), le dispositif étant **caractérisé en ce que** :
- le porte-poinçons (7) est pourvu d'un poinçon rectiligne (8a) centré sur un axe de symétrie (X) et d'au moins un poinçon (8) a une forme hélicoïdale enroulée autour d'un axe de symétrie (X) selon un sens d'enroulement et un pas d'enroulement (P) ;
- le système d'entraînement (10) entraîne en rotation le porte-poinçons (7) autour dudit axe de symétrie (X) selon un sens de rotation inverse du sens d'enroulement du ou des poinçons (8) de forme hélicoïdale et selon une vitesse de rotation (Vr) égale à la vitesse linéaire d'extrusion (VI) de la composition céramique, divisée par le pas d'enroulement (P) des poinçons de forme hélicoïdale (8).

5. Dispositif selon la revendication 4, selon lequel le porte-poinçons (7) est pourvu de plusieurs poinçons (8) de forme hélicoïdale enroulés de manière concentrique autour d'un axe de symétrie (X) commun selon un même sens d'enroulement et un même pas d'enroulement (P).

6. Dispositif selon la revendication précédente, selon lequel le porte-poinçons (7) est pourvu de plusieurs poinçons (8) de forme hélicoïdale disposés selon au moins deux couronnes concentriques.

7. Dispositif selon l'une des revendications 4 à 6, selon lequel chaque poinçon (8) ayant une forme hélicoïdale possède une longueur prise suivant l'axe de symétrie (X), égale ou supérieure au quart du pas d'enroulement (P).

8. Dispositif selon l'une des revendications 4 à 7, selon lequel le système d'entraînement (10) entraîne en rotation le porte-poinçons (7) avec une vitesse de rotation (Vr) égale à la vitesse linéaire d'extrusion (VI) de la composition céramique, divisée par le pas d'enroulement (P) des poinçons (8), en tenant compte d'une marge de tolérance de plus ou moins 15%.

9. Dispositif selon l'une des revendications 4 à 8, selon lequel le système d'alimentation (9) est un système du type piston ou à vis sans fin.

10. Dispositif selon l'une des revendications 4 à 9, selon lequel il comporte un système de chauffage (11) de la filière d'extrusion pour maintenir le porte-poinçons, le ou les poinçons et la composition céramique à une température comprise entre 50°C et 300°C.

11. Dispositif selon l'une des revendications 4 à 10, selon lequel le système d'entraînement en rotation (10) du porte-poinçons (7) est monté en aval du système d'alimentation (9).

12. Dispositif selon l'une des revendications 4 à 11, selon lequel le système d'entraînement en rotation (10) du porte-poinçons (7) est situé sur le côté du porte-poinçons (7) de sorte que l'axe de symétrie (X) du porte-poinçons est parallèle à la direction d'alimentation (D) du système d'alimentation (9).

13. Dispositif selon l'une des revendications 4 à 11, selon lequel le système d'entraînement en rotation (10) du porte-poinçons (7) est situé à l'arrière du porte-poinçons de sorte que l'axe de symétrie (X) du porte-poinçons fait un angle inférieur ou égal à 90° par rapport à la direction d'alimentation (D) du système d'alimentation (9) débouchant en amont ou en aval du porte-poinçons (7).

14. Procédé pour la fabrication d'un support tubulaire poreux (1) à partir d'une composition céramique, comportant les opérations suivantes:
- à mettre à disposition une filière d'extrusion fixe (6) dans laquelle est monté un porte-poinçons (7) pourvu d'un poinçon rectiligne (8a) centré sur un axe de symétrie (X) et d'au moins un poinçon (8) ayant une forme hélicoïdale enroulée autour de l'axe de symétrie (X) selon un sens d'enroulement et un pas d'enroulement (P) ;
- à assurer que la composition céramique franchisse le porte-poinçons (7) pour traverser la filière d'extrusion (6) selon une vitesse linéaire d'extrusion (VI) ;
- et à assurer l'entraînement en rotation du porte-poinçons (7) selon un sens de rotation inverse du sens d'enroulement du poinçon (8) de forme hélicoïdale et avec une vitesse de rotation (Vr) égale à la vitesse linéaire d'extrusion (VI) de la composition céramique, divisée par le pas d'enroulement (P) des poinçons de forme hélicoïdale (8).

15. Procédé selon la revendication 14, selon lequel afin que la vitesse de rotation (Vr) du porte-poinçons (7) soit égale à la vitesse linéaire d'extrusion (VI) de la composition céramique, divisée par le pas d'enroulement P, on agit sur le réglage soit uniquement de la vitesse de rotation du porte-poinçons (7) soit uniquement sur la vitesse linéaire d'extrusion (VI) soit sur la vitesse de rotation du porte-poinçons et sur la vitesse linéaire d'extrusion.

16. Procédé selon l'une des revendications 14 ou 15, selon lequel on alimente la filière d'extrusion fixe (6) avec une composition céramique comportant une phase inorganique solide pulvérulente sous la forme de particules de diamètre moyen compris entre 0,1 et 150 micromètres et une matrice.

17. Procédé selon l'une des revendications 14 à 16, selon lequel on alimente la filière d'extrusion fixe (6) avec une composition céramique comportant une première phase inorganique solide pulvérulente sous la forme de particules de diamètre moyen compris entre 0,1 et 150 micromètres et une seconde phase sous la forme d'une matrice comprenant au moins un polymère thermo fusible.

18. Procédé selon l'une des revendications 14 à 17, selon lequel au moins un extrudat est récupéré en sortie de la filière d'extrusion fixe (6) avec une longueur déterminée pour former un support tubulaire monolithique poreux et en ce que cet extrudat est soumis à un post traitement de frittage.

## Patentansprüche

1. Poröser rohrförmiger Träger (1) für tangentiale Filtrationsmembran, die in Form eines gesinterten monolithischen keramischen porösen Körpers vorliegt, hergestellt durch Extrusion einer keramischen Zusammensetzung, umfassend eine feste pulverförmige anorganische Phase und in dem durch Extrusion mittels Stempeln, ein gerader Kanal (2a), der auf einer Symmetrieachse des Trägers zentriert ist, und mindestens einen Strömungskanal (2) für ein zu behandelndes fluides Medium mit einer um die Symmetrieachse gewundenen Spiralform, wobei die Kanäle eine begrenzte und niedrigere Wandrauheit als die Körnigkeit der pulverförmigen festen anorganischen Phase der keramischen Zusammensetzung aufweisen.

2. Poröser rohrförmiger Träger nach Anspruch 1, wobei der gesinterte monolithische keramische poröse Körper einem Innendruck von mindestens 10 bar standhält, ohne zu bersten.

3. Tangentiale Filtrationsmembran, wobei mindestens eine Trennschicht die Wand der Strömungskanäle (2, 2a) des zu behandelnden fluiden Mediums des rohrförmigen porösen Träger (1) nach Anspruch 1 oder 2 überzieht.

4. Vorrichtung zur Herstellung durch Extrusion eines porösen rohrförmigen Trägers (1) aus einer keramischen Zusammensetzung, die Vorrichtung umfassend:
- eine feststehende Extrusionsdüse (6), in der ein Stempelhalter (7) montiert ist, der mit mindestens einem Stempel (8) versehen ist;
- ein Drehantriebssystem (10) des Stempelhalters (7);
- und eine Zufuhrvorrichtung (9), um die keramische Zusammensetzung zu zwingen, unter Druck den Stempelhalter (7) zu passieren, um die Extrusionsdüse (6) mit einer linearen Extrusionsgeschwindigkeit (VI) zu durchqueren, wobei die Vorrichtung **dadurch gekennzeichnet ist, dass**:
- der Stempelhalter (7) mit einem geraden Stempel (8a) versehen ist, der auf einer Symmetrieachse (X) zentriert ist, und mindestens ein Stempel (8) eine spiralförmige Form aufweist, die gemäß einer Wickelrichtung und einer Wickelsteigung (P) um eine Symmetrieachse (X) gewickelt ist;
- das Antriebssystem (10) den Stempelhalter (7) um die Symmetrieachse (X) in einer Drehrichtung entgegengesetzt zu der Wickelrichtung des oder der spiralförmigen Stempel (8) und mit einer Drehgeschwindigkeit (Vr) gleich wie die lineare Extrusionsgeschwindigkeit (VI) der keramischen Zusammensetzung, geteilt durch die Wickelsteigung (P) der spiralförmigen Stempel (8), in Drehung versetzt.

5. Vorrichtung nach Anspruch 4, wobei der Stempelhalter (7) mit mehreren spiralförmigen Stempeln (8) versehen ist, die gemäß einer gleichen Wickelrichtung und einer gleichen Wickelsteigung (P) konzentrisch um eine gemeinsame Symmetrieachse (X) gewickelt sind.

6. Vorrichtung nach dem vorherigen Anspruch, wobei der Stempelhalter (7) mit mehreren spiralförmigen Stempeln (8) versehen ist, die in mindestens zwei konzentrischen Kränzen angeordnet sind.

7. Vorrichtung nach einem der Ansprüche 4 bis 6, wobei jeder Stempel (8), der eine spiralförmige Form aufweist, eine Länge gleich wie oder größer als ein Viertel der Wickelsteigung (P) entlang der Symmetrieachse (X) aufweist.

8. Vorrichtung nach einem der Ansprüche 4 bis 7, wobei das Antriebssystem (10) den Stempelhalter (7) mit einer Drehgeschwindigkeit (Vr) in Drehung versetzt, die unter Berücksichtigung einer Toleranzspanne von plus oder minus 15 % gleich wie die lineare Extrusionsgeschwindigkeit (VI) der keramischen Zusammensetzung geteilt durch die Wickelsteigung (P) der Stempel (8) ist.

9. Vorrichtung nach einem der Ansprüche 4 bis 8, wobei das Zufuhrsystem (9) ein System vom Typ Kolben oder Endlosschnecke ist.

10. Vorrichtung nach einem der Ansprüche 4 bis 9, wobei sie ein Heizsystem (11) für die Extrusionsdüse umfasst, um den Stempelhalter, den Stempel oder die Stempel und die keramische Zusammensetzung auf einer Temperatur zwischen 50 °C und 300 °C zu halten.

11. Vorrichtung nach einem der Ansprüche 4 bis 10, wobei das Drehantriebssystem (10) des Stempelhalters (7) stromabwärts von dem Zufuhrsystems (9) montiert ist.

12. Vorrichtung nach einem der Ansprüche 4 bis 11, wobei sich das Drehantriebssystem (10) des Stempelhalters (7) an der Seite des Stempelhalters (7) befindet, sodass die Symmetrieachse (X) des Stempelhalters parallel zu der Zufuhrrichtung (D) des Zufuhrsystems (9) ist.

13. Vorrichtung nach einem der Ansprüche 4 bis 11, wobei sich das Drehantriebssystem (10) des Stempelhalters (7) an der Rückseite des Stempelhalters befindet, sodass die Symmetrieachse (X) des Stempelhalters einen Winkel von weniger als oder gleich wie 90° in Bezug auf die Zufuhrrichtung (D) des Zufuhrsystems (9) bildet, das stromaufwärts oder stromabwärts von dem Stempelhalter (7) mündet.

14. Verfahren zur Herstellung eines porösen rohrförmigen Trägers (1) aus einer keramischen Zusammensetzung, umfassend die folgenden Schritte:
- Bereitstellen einer feststehenden Extrusionsdüse (6), in der ein Stempelhalter (7) montiert ist, der mit einem geraden Stempel (8a) versehen ist, der auf einer Symmetrieachse (X) zentriert ist, und mit mindestens einem Stempel (8), der eine spiralförmige Form aufweist, die gemäß einer Wickelrichtung und einer Wickelsteigung (P) um eine Symmetrieachse (X) gewickelt ist;
- Sicherstellen, dass die keramische Zusammensetzung den Stempelhalter (7) passiert, um die Extrusionsdüse (6) mit einer linearen Extrusionsgeschwindigkeit (VI) zu durchqueren;
- und Sicherstellen des Drehantriebs des Stempelhalters (7) gemäß einer Drehrichtung entgegen der Wickelrichtung des spiralförmigen Stempels (8) und mit einer Drehgeschwindigkeit (Vr) sicherzustellen, die gleich wie die lineare Extrusionsgeschwindigkeit (VI) der keramischen Zusammensetzung, geteilt durch die Wickelsteigung (P) der spiralförmigen Stempel (8), ist.

15. Verfahren nach Anspruch 14, wobei, damit die Drehgeschwindigkeit (Vr) des Stempelhalters (7) gleich wie die lineare Extrusionsgeschwindigkeit (VI) der keramischen Zusammensetzung, geteilt durch die Wickelsteigung P, ist, auf die Einstellung entweder nur der Drehgeschwindigkeit des Stempelhalters (7) oder nur der linearen Extrusionsgeschwindigkeit (VI) oder der Drehgeschwindigkeit des Stempelhalters und der linearen Extrusionsgeschwindigkeit eingewirkt wird.

16. Verfahren nach einem der Ansprüche 14 oder 15, wobei die feststehende Extrusionsdüse (6) mit einer keramischen Zusammensetzung beschickt wird, umfassend eine pulverförmige feste anorganische Phase in Form von Partikeln mit einem mittleren Durchmesser zwischen 0,1 und 150 Mikrometern und eine Matrix.

17. Verfahren nach einem der Ansprüche 14 bis 16, wobei die feststehende Extrusionsdüse (6) mit einer keramischen Zusammensetzung beschickt wird, umfassend eine erste pulverförmige feste anorganische Phase in Form von Partikeln mit einem mittleren Durchmesser zwischen 0,1 und 150 Mikrometern und eine zweite Phase in Form einer Matrix, umfassend mindestens ein wärmeschmelzbares Polymer.

18. Verfahren nach einem der Ansprüche 14 bis 17, wonach mindestens ein Extrudat am Ausgang der feststehenden Extrusionsdüse (6) mit einer bestimmten Länge gewonnen wird, um einen porösen monolithischen rohrförmigen Träger zu bilden, und dass dieses Extrudat einer Sinterungsnachbehandlung unterzogen wird.

## Claims

1. A porous tubular support (1) for a tangential filtration membrane, in the form of a sintered monolithic ceramic porous body, manufactured by extrusion of a ceramic composition including a powdery solid inorganic phase and in which are arranged by extrusion using punches, a rectilinear channel (2a) centered on an axis of symmetry of the support and at least one circulation channel (2) for a fluid medium to be treated with a helical shape wound around the axis of symmetry, the channels having a limited wall roughness and lower than the granularity of the powdery solid inorganic phase of the ceramic composition.

2. The porous tubular support according to claim 1 according to which the sintered monolithic ceramic porous body supports an inner pressure of at least 10 bars without bursting.

3. A tangential filtration membrane according to which at least one separating layer coats the wall of the circulation channels (2, 2a) for the fluid medium to be treated of the porous tubular support (1) according to claim 1 or 2.

4. A device for the manufacture by extrusion of a porous tubular support (1) from a ceramic composition, the device including:
- a fixed extrusion die (6) in which a punch holder (7) provided with at least one punch (8) is mounted;
- a system (10) for driving in rotation the punch holder (7);
- and a supply device (9) to force the ceramic composition to cross under pressure the punch holder (7) in order to pass through the extrusion die (6) at a linear speed of extrusion (VI), the device being **characterized in that**:
- the punch holder (7) is provided with a rectilinear punch (8a) centered on an axis of symmetry (X) and with at least one helically-shaped punch (8) wound around an axis of symmetry (X) along a winding direction and a winding pitch (P);
- the drive system (10) drives in rotation the punch holder (7) around said axis of symmetry (X) along a direction of rotation opposite to the direction of winding of the helically-shaped punch(es) (8) and at a speed of rotation (Vr) equal to the linear speed of extrusion (VI) of the ceramic composition, divided by the winding pitch (P) of the helically-shaped punches (8).

5. The device according to claim 4, according to which the punch holder (7) is provided with several helically-shaped punches (8) concentrically wound around a common axis of symmetry (X) along the same winding direction and the same winding pitch (P).

6. The device according to the preceding claim, according to which the punch holder (7) is provided with several helically-shaped punches (8) disposed in at least two concentric rings.

7. The device according to any of claims 4 to 6, according to which each helically-shaped punch (8) has a length taken along the axis of symmetry (X), equal to or greater than a quarter of the winding pitch (P).

8. The device according to any of claims 4 to 7, according to which the drive system (10) drives in rotation the punch holder (7) with a speed of rotation (Vr) equal to the linear speed of extrusion (VI) of the ceramic composition, divided by the winding pitch (P) of the punches (8), by taking into account a tolerance margin of plus or minus 15%.

9. The device according to any of claims 4 to 8, according to which the supply system (9) is a piston or worm-type system.

10. The device according to any of claims 4 to 9, according to which it includes a system (11) for heating the extrusion die to maintain the punch holder, the punch(es) and the ceramic composition at a temperature comprised between 50°C and 300°C.

11. The device according to any of claims 4 to 10, according to which the system (10) for driving in rotation the punch holder (7) is mounted downstream of the supply system (9).

12. The device according to any of claims 4 to 11, according to which the system (10) for driving in rotation the punch holder (7) is located on the side of the punch holder (7) so that the axis of symmetry (X) of the punch holder is parallel to the supply direction (D) of the supply system (9).

13. The device according to any of claims 4 to 11, according to which the system (10) for driving in rotation the punch holder (7) is located at the rear of the punch holder so that the axis of symmetry (X) of the punch holder makes an angle less than or equal to 90° relative to the supply direction (D) of the supply system (9) opening out upstream or downstream of the punch holder (7).

14. A method for manufacturing a porous tubular support (1) from a ceramic composition, including the following operations:
- providing a fixed extrusion die (6) in which is mounted a punch holder (7) provided with a rectilinear punch (8a) centered on an axis of symmetry (X) and with at least one helically-shaped punch (8) wound around the axis of symmetry (X) along a winding direction and a winding pitch (P);
- ensuring that the ceramic composition crosses the punch holder (7) in order to pass through the extrusion die (6) at a linear speed of extrusion (VI);
- and ensuring that the punch holder (7) is driven in rotation along a direction of rotation opposite to the direction of winding of the helically-shaped punch (8) and with a speed of rotation (Vr) equal to the linear speed of extrusion (VI) of the ceramic composition, divided by the winding pitch (P) of the helically-shaped punches (8).

15. The method according to claim 14, according to which, for the speed of rotation (Vr) of the punch holder (7) to be equal to the linear speed of extrusion (VI) of the ceramic composition, divided by the winding pitch P, we act on the adjustment either of only the speed of rotation of the punch holder (7) or only the linear speed of extrusion (VI) or the speed of rotation of the punch holder and the linear speed of extrusion.

16. The method according to any of claims 14 or 15, according to which the fixed extrusion die (6) is supplied with a ceramic composition including a powdery solid inorganic phase in the form of particles with an average diameter comprised between 0.1 and 150 micrometers and a matrix.

17. The method according to any of claims 14 to 16, according to which the fixed extrusion die (6) is supplied with a ceramic composition including a first powdery solid inorganic phase in the form of particles with an average diameter comprised between 0.1 and 150 micrometers and a second phase in the form of a matrix comprising at least one hot-melt polymer.

18. The method according to any of claims 14 to 17, according to which at least one extrudate is recovered at the outlet of the fixed extrusion die (6) with a determined length to form a porous monolithic tubular support and in that this extrudate is subjected to a sintering post-treatment.
